# EUROPEAN PATENT SPECIFICATION

(11) **EP 1 421 773 B1**
(45) Date of publication and mention of the grant of the patent: **25.01.2017**
(21) Application number: 02753130.0
(22) Date of filing: 31.07.2002
(51) Int. Cl.: H04M 3/51, H04M 3/22, G10L 15/26

(54) **TELECOMMUNICATION INTERACTION ANALYSIS**
TELEKOMMUNIKATIONSINTERAKTIONSANALYSE
ANALYSE DES INTERACTIONS AFFECTANT LES TELECOMMUNICATIONS

(30) Priority: 02.08.2001 GB 0118921
(43) Date of publication of application: 26.05.2004
(73) Proprietor: Eyretel PLC, Leatherhead, Surrey KT22 7SZ (GB)
(72) Inventor: BLAIR, Christopher, Douglas, South Chailey, East Sussex BN8 4AP (GB); PEREIRA, Ainsley, Malcolm, Horsham, West Sussex RH12 4AH (GB); SAARISTE, Samuel, Horsham, West Sussex RH13 5LJ (GB)
(74) Representative: Smallman, Clint Guy
(86) International application number: PCT/GB2002/003532
(87) International publication number: WO 2003/013113

(56) References cited:
- EP-A- 0 981 237
- EP-A- 1 096 767

## Description

The present invention relates to the analysis of communication signals and in particular such signals representing interaction between the users of a telecommunication system.

Commercial organizations have, for some time, taken the step of recording communications streams such as telephone calls between their staff and their customers. Traditionally this has been necessary to help satisfy regulatory requirements or to help resolve disputes. More recently, the emphasis has moved towards the review of such communications interactions from a quality perspective: the aim being to identify good and bad aspects and characteristics of communication exchanges with a view to improving the level of customer service given.

Also, a record of activity as occurring on an associated display such as a PC screen can also be made and can serve to improve the completeness of a communication-exchange review procedure. In this manner, the reviewer is then able to ascertain how accurately staff are entering information provided during a telephone conversation. Also, particular aspects of an employee's data entry skills and familiarity with the application can be reviewed by recording keystrokes and mouse movement/clicks etc.

So-called Call Detail Recording systems have been employed in order to allow for the prevention of abuse of telephone systems and to apportion costs to the relevant department or individual making the calls. Originally, such records were printed out directly from the Private Automatic Branch Exchange (PABX) onto a line printer. Systems are also now available that are able to store this information in a database allowing more sophisticated reporting and for the searching of calls on the basis of one or more of the details related to the stored call.

Several systems have been developed, for example the AutoQuality system available from e-Talk, and the eQuality system available from Witness Systems and also the present applicant's QualityCall system, that employ call recording in combination with call detail recording and a database application to perform routine monitoring of calls with the intention of identifying weaknesses in the performance of individual Customer Service Representatives (CSRs). Typically a small percentage of the CSRs' calls are reviewed and scored against a set of predetermined criteria to give an indication of the performance of the member of staff.

Also of relevance is the current state of the art of speech recognition systems. First, the automation of simple interactions previously conducted via human interaction, or via touch tone menus, can be achieved. Secondly, dictation products are available that can translate the contents of an audio input into text even though they may exhibit error rates that are greater than would be acceptable if a meaningful transcription of the call was required.

Recording systems are also available that can be arranged to provide for the analysis of the content of, for example, a communications stream. Systems providing for the recording of particular events, or incidents, that might arise during a telephone conversation, and the time at which such events or incidents occur within a communications interaction have also been developed.

Such known systems however, and in particular quality-monitoring systems, exhibit disadvantages and limitations and are discussed in International Application WO 01/52510.

For example, such systems tend to be extremely labour intensive. The time required to review an interaction can typically take at least as long as the original interaction lasted. It can also prove necessary to listen to and review the recording of the interaction several times. For example, an initial review may be required in order to determine the content and type of call, and whether or not it is complete enough and appropriate to allow for full evaluation. If so, it is then re-played completely for review against predetermined scoring criteria. It then has to be re-played again for review with the CSR who took the call.

Known systems also prove unable to identify infrequent problems. Because of the time taken to review a call, it is rare that more than a fraction of one percent of all calls are evaluated and reviewed. This renders the reviewed calls statistically very poor for identifying rare problems. Realistically, such systems can only hope to provide an indication of the average quality of interactions carried out by each CSR.

Increasingly, CSRs are expected to be multi-skilled and to handle a wide range of different types of calls. Unless many more hours are spent reviewing calls, it is impossible effectively to identify problems that occur in a small proportion of a CSR's calls. If problems are only rarely spotted, it then becomes very difficult to recognize underlying patterns since such instances become isolated.

Also, such known systems are very much subjective and, even with the best training and call-evaluation coaching, the evaluator will apply at least some degree of subjectivity to their evaluation particularly with softer aspects of assessment such as customer satisfaction levels. While such systems can provide tools that highlight discrepancies between different evaluators, they are restricted in that they cannot serve to prevent such subjectivity.

Known systems also are not generally normalized. For example, the manner in which organizations choose to measure call quality is entirely at their discretion and so a 95% quality rating achieved by one organization may in reality be worse than the 90% rating achieved by another organization employing a stricter marking schema. This lack of consistency between organizations makes it difficult, for example, for organizations to evaluate how they compare with their industry peers or indeed with other industries.

The present invention seeks to provide for a system and related method which can offer advantages over known such systems and methods.

EP-A-0981,237 and EP-A-1,096,767 describes call monitoring systems operating in real time while calls are being made. EP-A-0981,237 describes an automatic call distributor (ACD) silent call monitoring system in which a DSP monitors calls in real time to detect voice patterns associated with poor customer service. If indications of poor customer service are detected during a call a supervisor terminal is alerted. EP-A-1,096,767 describes a system that automatically monitors calls for problematic call attributes, such as inappropriate language. If a call is determined to be problematic, a call centre supervisor is automatically notified.

According to the invention there is provided a method of monitoring related communication signal streams, comprising: receiving an incoming communication signal stream from a calling party to a customer service representative of the related communication signal streams; receiving an outgoing communication signal stream from the customer service representative to the calling party of the related communication signal streams; receiving control information associated with the related communication signal streams; and recording the related communication signal streams and the control information; the method being characterised by automatically analyzing, at a search and replay application, the recorded related communication signal streams at a first analysis module to determine recording details and content of the related communication signal streams; automatically providing the recording details and content to a second analysis module to derive statistical details and an energy envelope of the related communication signal streams, the second analysis module further including a speech recognition module that determines a transcript of the related communication signal streams; automatically providing a graphical output of the statistical details and energy envelope to the search and replay application; and automatically scoring the related communication signal streams against a set of predetermined criteria based on the transcript to provide an indication of a performance of the customer service representative. The method may further comprise the step of storing the statistical details and energy envelope of the related communication signal streams in a database. The second analysis module may further comprise an energy envelope module that determines the audio level of the incoming communication signal stream and the outgoing communication signal stream. The statistical details and energy envelope may comprise one of a ratio of quiet periods to active periods, periods of clipping, or a maximum value of the audio level. The second analysis module may further comprise an energy envelope analysis module that determines characteristics of the related communication signal. The characteristics of the related communication signal may comprise at least one of a proportion of talk periods to listen periods, a frequency of confirmatory feedback from each party, a frequency of argumentative interruption, a proportion of silent periods, locations of sustained silences within the related communication signal streams, which party breaks the silence, an unusual call termination pattern, or episodes of shouting or increasing volume. The transcript may comprise at least one of identified keywords, a sequence of recognized words, a location of recognized words within the related communication signal streams, and a degree of confidence of the recognition. The second analysis module may further comprise a language analysis module that determines phrases within the related communication signal streams. The second analysis module may further comprise a keystroke/mouse analysis module that determines string matches and outputs a string file as additional characteristics, and the additional characteristics may comprise at least one of keywords, phrases, typing skills and a range analysis.

The invention can prove advantageous in at least partially automating the assessment and categorization of recordings. That is, by recording and subsequently analyzing various aspects of the interactions, the system automates the measurement of a range of attributes which previously could only be determined by listening/viewing recordings. For example, these can include, customer satisfaction, call structure (ratio of talking to listening), degree of interruption occurring, degree of feedback given to/from customer, CSR's typing speed and accuracy, CSR's familiarity with and use of the computer application(s) provided, training needs, use of abusive language, occurrence of shouting/heated exchanges, degree of confusion, adherence to script, avoidance of banned words/phrases and the likelihood of customer/CSR having been hung up on.

As a further advantage, the invention can highlight unusual calls for efficient manual review. By measuring the attributes described above, the calls with the highest/lowest scores on each or a combination of such categories can be presented for review. In addition to having automatically selected the calls most likely to be of interest, the present invention provides for mechanisms to present the candidate calls for efficient review. It does this by retaining information, specifically the start and end times related to incidents within the call that led to it being selected. By way of such information, the most appropriate parts of the call can be selectively played without human intervention. For example, when reviewing potentially abusive calls, only the audio signals approximate to the point where a swear word was identified need be played in order for the reviewer to determine whether or not this is a genuine case of an abusive call or whether a false indication has occurred. Similarly when reviewing calls that are identified as having terminated by one party hanging-up only the last few seconds of the call need be played i.e. the section just prior to the termination. This can therefore allow rapid unattended replay of successive examples without the user having to interact with the system except perhaps to interrupt operation when a potentially interesting call is heard.

The invention can also advantageously offer an objective analysis of the calls. By applying fixed rules and algorithms to the identification of incidents within the calls, and the subsequent categorization or scoring of calls against predetermined criteria and weighting, the scores derived for a given call are deterministic and consistent. Whilst in some respects, the automated scores may not seem as accurate as could be achieved by a well trained human scorer, the fact that the scores can be determined from a much larger sample of, and ideally all available calls, makes them much less subject to random fluctuations than would occur with the small samples such as are scored manually.

Also, the invention can advantageously achieve consistency of analysis. Some aspects of calls that can be measured are independent of the particular products, services or organizations that a customer is dealing with in the interaction. For example, customer satisfaction, if measured by analysis of the words and phrases spoken by the customer during the call can legitimately be compared across a wide range of organizations and industries. As long as the algorithm used to determine the customer satisfaction rating is kept constant, relative levels of satisfaction can thereby be measured across peer groups and across different industries.

The invention is described further hereinafter, by way of example only, with reference to the accompanying drawings in which:
Fig. 1 is a schematic block diagram of an analysis system embodying the present invention;
Fig. 2 is a schematic block diagram of the recording and analysis sub-system of Fig. 1;
Fig. 3 is a schematic diagram illustrating the separating of an embodiment of the present invention;
Fig. 4 is a schematic diagram illustrating a generic analysis module according to an embodiment of the present invention;
Fig. 5 is a schematic representation of one particular embodiment of analysis module of the present invention;
Fig. 6A and 6B illustrate graphical displays desirable from an analysis module such as that of Fig. 5;
Fig. 7 is a schematic representation of a further embodiment of analysis module embodying the present invention;
Fig. 8 is a schematic representation of yet another embodiment of analysis module of the present invention;
Fig. 9 is a schematic representation of a further embodiment of analysis module of the present invention; and
Fig. 10 is a schematic representation of yet a further embodiment of analysis module of the present invention.

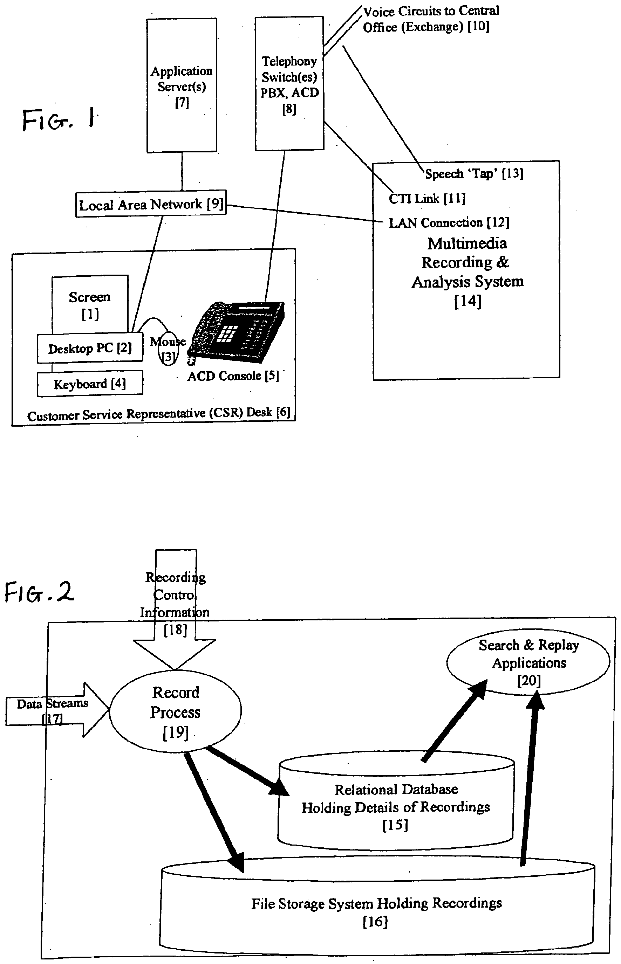

Turning first to Fig. 1, there is illustrated a multimedia recording and analysis system 14 which is arranged to incorporate the specific methods and systems of the present invention and which is used to monitor the interaction between a CSR and the people/customers and/or systems with whom/which the CSR interacts. Such interaction is conducted by means of a telephone system typically including, as in this example, a console 5 on the CSR's desk and a central switch 8 through which connectivity to the public switched telephone network (PSTN) is achieved via one or more voice circuits 10.

The CSR will typically utilize one or more computer applications accessed through a terminal or PC at their desk 2 with which they can interact by means of the screen 1, mouse 3 and a keyboard 4. The software applications employed may run locally on such a PC or centrally on one or more application server(s) 7.

The system 14 embodying aspects of the present invention can advantageously offer connections to so as to monitor and/or record any required combination of aspects such as the audio content of telephone conversations undertaken by the CSR's by means of a speech tap 13 or the contents of the screen on the CSR's desk during interactions. This latter aspect can require software to be loaded onto the CSR's PC 2 to obtain such information and pass it to the recording system.

The keystrokes, mouse movements and actions of the CSR can be monitored and can also typically require software to be loaded onto the CSR's PC 2. Monitoring of the context of, and data entered into or displayed by, the applications being used can typically require system integration to have the applications pass such information to the recording system. Further, the details of calls placed, queued and transferred etc by the telephony system can be monitored.

It should of course be appreciated that this is merely a typical example of a system that can employ the present invention and numerous variants on this theme are well known, such as the use of Voice Over IP (VoIP), the tapping of the audio signals at the console rather than the trunks, and the use of silent monitoring features to allow for tapping into selected consoles.

Fig. 2 represents a high level view of the major components within a recording and analysis system embodying the present invention. It should be appreciated that such systems are typically deployed across multiple sites and are implemented on multiple computer platforms. However, the major functional blocks remain the same.

Incoming data streams, such as voice, screen content, events etc. 17, and recording control information such as CTI information from an ACD that trigger commands from a desktop application etc. 18 are processed by one or more record processors 19. The net results of such processing are, first the storage of call content in some form of nonvolatile storage system such as a disk file storage system 16 can be achieved, and secondly details about the recordings made can be stored in a relational database 15 allowing subsequent search and retrieval on the basis of a number of criteria.

These recordings and the details about them are then subsequently available for one or more search and replay applications that allow users, or other applications such as a customer relationship management system, to access the particular recording(s) they require. One such application is a quality assessment application which will typically make random or pre-programmed selections of recordings and present these to a reviewer for evaluation and subsequent analysis of the results of the said evaluations. Such call-flow recording is described in the present applicant's International application WO 01/52510.

The enhancements to such recording and analysis systems that can be achieved by the present invention relate to methods that act upon the content of the recordings and/or the details about such recordings. In a system of the type shown in Fig. 2, such processes may be advantageously applied at one or more of a variety of points in the system. The optimum location for each method will depend generally on the analysis being performed and also the accuracy required and the topology of the system.

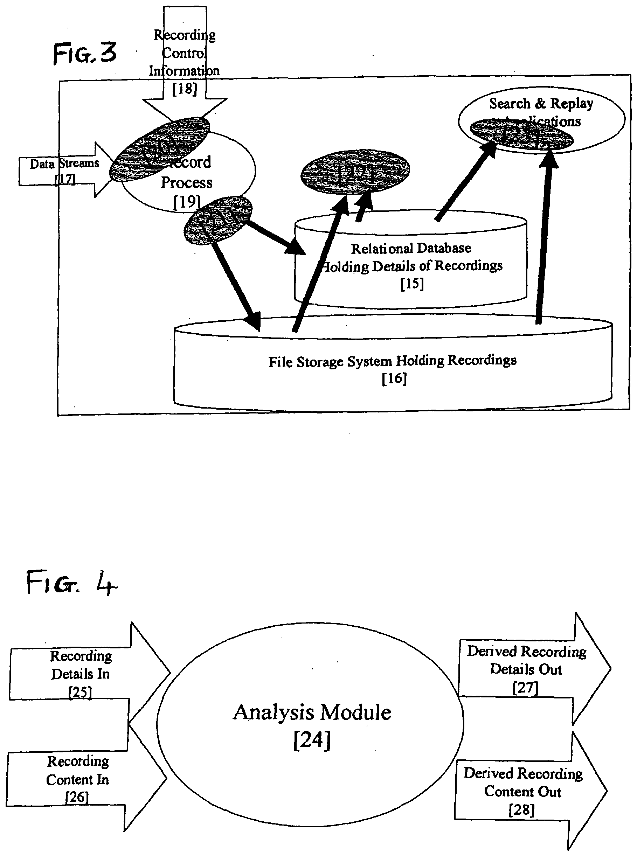

Examples of the options for deploying such methods as described are shown in Fig. 3 and are as follows. First, the point 20 in the system at which the method is employed can comprise part of the record process, with access to the raw, unprocessed, information as received. This may prove to be the only way in which to influence the operation of the recording system as a result of the analyses performed in real-time. Such a location may also be the only point at which unadulterated information is available, for example un-compressed audio that is only stored subsequently to disk once it has been compressed and/or mixed with information/data from other input channels. An alternative location comprises the point at which data is written to disk. This can prove particularly useful if only a subset of input data is to be recorded. By applying the required algorithms to data at this point, resources are not wasted in attempting to process data that was not actually recorded.

The present applicant's European patent application EP-A-0 833 489 discloses features such as those described above.

A further option comprises a location 22 forming part of an offline process. Here, although the overhead of having to query the database and/or read the recording content from disk is incurred, this does allow ongoing 24 hour analysis since it may not prove possible to keep up with the rate of recordings made during the busiest periods of the day.

Advantageously, it can be arranged that such analysis modules are deployed on the CSR'S desktop PCS during periods when the PCS would otherwise be idle. This allows economic deployment of complex analysis such as full speech recognition which, otherwise, would disadvantageously require additional investment in additional processors or would have to be restricted to a much smaller subset of the total recordings.

Also, at location 23, some of the analyses may be performed as part of search and replay applications. This is particularly advantageous for analyses that can be performed rapidly on a small set of calls that are already known to be of interest to the application/user in question. The details about the recordings, and the recordings themselves, will in some instances, already have been retrieved by that application and so will be accessible to the analysis tools of the present invention.

Such an arrangement is illustrated by reference to Fig. 4 in which call recording details 25 and call recording content 26 are input to an analysis module 24.

The analysis algorithm within the module 24 operates on these inputs to produce further details 27 about the recordings and/or further recordings 28 derived from the input recordings.

Again, according to deployment, these outputs may simply be used by the application holding the module such as at location 23 or may be written back to the database 15 and/or file system 16. In the latter case it should be noted that the outputs from any module are therefore available as inputs to other modules allowing cascading of analyses such that some modules may produce interim results whilst others further process the outputs or combine them with the outputs of still further modules to produce composite and derived outputs.

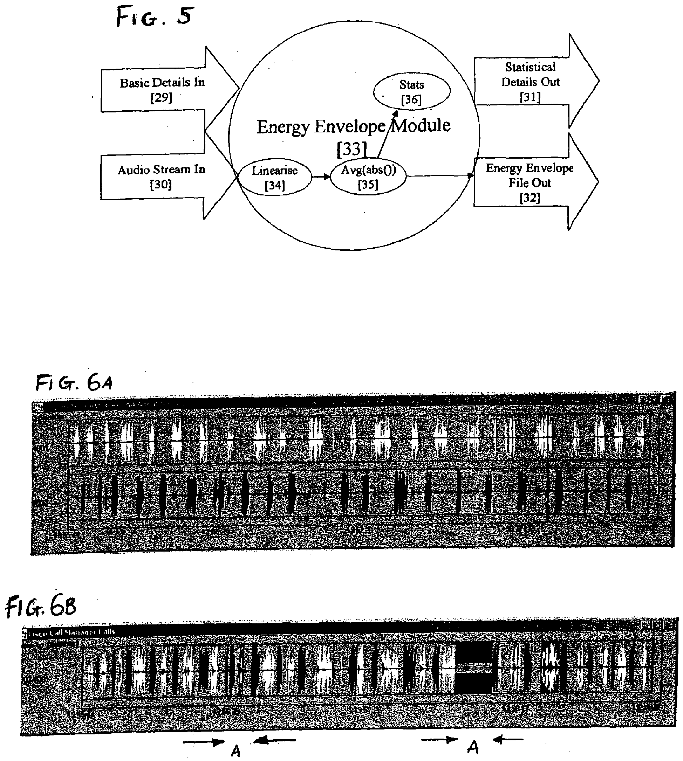

An example of such a module is shown in Fig. 5 and is arranged to produce an output file for each input voice recording which summaries the audio level or energy present throughout the recording. In its simplest form such an energy envelope module 33 is arranged to operate on an incoming audio signal 30 and convert it to a signed linear encoding scheme 31 if it is not already in such a format. It then averages the absolute value (or, optionally the square of the value) over a fixed interval in the order of typically 50ms. This interval is chosen so that when displayed graphically, the resolution of the samples is sufficient to allow easy visibility of the words and pauses in the recording. An example of a graphical output derived from such an energy envelope' file is shown in Figure 6A These files prove useful in serving as thumbnail graphical overviews of calls as well as serving as useful input for subsequent analysis stages. The energy files avoid the need to retrieve the entire audio recording, and to decompress it, and so make many subsequent analyses viable that would otherwise prove prohibitive due to network bandwidth and/or processing requirements.

As with all other parameters recorded in the invention, the storage may be beneficially accomplished by writing the information in the form of an XML file. The structure of the energy envelope file can be very simple for example it can comprise merely a succession of the average energy values. Beneficially however, the maximum energy value encountered within the file is noted at the start of the file. This allows an application using this file to perform scaling on the file without first having to read the entire file in search of the maximum value.

This maximum value is noted by a statistical analysis function 36 as illustrated in Fig. 5 as the recording is being processed. Additional statistics derived from the energy values may also be derived at this time. For example, the ratio of quiet periods (when energy is below a specified threshold for a high proportion of the samples) to active periods can be obtained. Also, the prevalence and location within the call of any periods of clipping, i.e. where the audio signal saturates at the extreme of the available audio range leading to distortion can be identified. This may indicate extreme volume levels such as those arising due to the customer shouting.

This module is advantageously deployed where the audio signal has not yet been compressed. It is much more economical to convert standard telephony signals (e.g. in G.711 mu-law or A-law) to linear than it is to decompress a heavily compressed audio signal.

Furthermore, some parameters such as the "degree of clipping" are adversely affected by the compression algorithms employed.

The module 33 can further advantageously be deployed prior to any mixing of audio signals such as occurs at location 20 in Fig. 3 such that the output energy envelope file reflects the audio levels in a single direction of speech received. Thus, although the original transmit and receive signals may be subsequently mixed into a single audio file for more efficient storage, the two energy envelope files may be used to produce a clear graphical display as shown in Figure 6B that highlights who was talking and when, and also enables interruptions to be highlighted as indicated by arrows A.

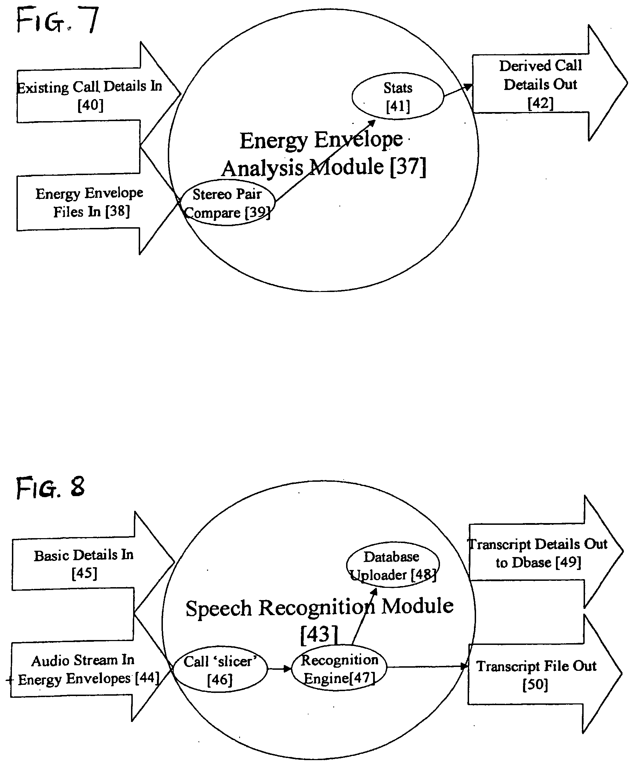

Referring now to Fig. 7, an energy envelope analysis module 37 takes as its input, one or more energy envelope files 38 plus details about the calls 40 to which they relate. Typically, the module 37 will serve to analyze the two energy envelope files relating to the transmit and receive audio paths for a single call but may also compare a set of energy envelope files for a set of supposedly similar calls. Statistical analysis indicated at 39, 41 of the input energy envelope files can be performed to derive output information such as those discussed as follows.

The proportion of talk periods to listen periods within the call. The frequency of confirmatory feedback from each party in the call, i.e. when one party is speaking, the other will normally respond with an 'uh-huh' or similar utterances which shows as a brief burst of energy on one channel in the midst of a sustained burst of energy due to the sentence being spoken on the other. The frequency and proportion of argumentative interruption which can be defined as sustained activity on both channels concurrently for a period exceeding the normal time needed for one party to concede control of the conversation to the other. The proportion of silent periods within the call. The locations of sustained silences within the call and also which party eventually breaks the silence. An unusual call termination pattern different from the usual pattern at the end of a call, when each party speaks briefly, to say goodbye etc. followed by a brief pause and then a loud click as the call is terminated. An abrupt termination of a call within a sustained period of activity by one or other party which can indicate a likely abnormal call-termination. Episodes of shouting or increasing volume, in which the average volume of one or both speakers alters during the course of the call and which can be flagged as a possible indication of a heated conversation.

Any of the aforementioned may be combined with a weighting profile that influences the effect of each function of time throughout the call. For example, the determined value of output information preferred talk-to-listen profile may be 50:50 during the first 30% of the call but then may change to a ratio 30:70 thereafter.

A more sophisticated analysis can be performed by utilizing speech recognition tools in order to identify keywords within recordings or to perform large vocabulary transcription of the audio into text. Fig. 8 illustrates such a module 43. The audio streams and, optionally, energy envelope files previously generated 44 are used as an input, along with any pre-existing details 45 about the recordings. The input may initially be sliced at location 46 using the energy envelope files and other details to determine which portions, if not all, of the recording are to be analyzed by a speech recognition engine 47. The recognition engine 47 is then delivered to a database 49 of entries listing transcript and/or individual words recognized via a database and/or to a file 50 holding similar details directly on the file storage system.

The output from such a speech recognition module 43 is typically one or more of a so-called best guess transcription of the call, or a sequence of recognized words or phrases, their locations within the call and some measure of the likely degree of confidence in their recognition

Such details can be stored for direct searching so as, for example, to find all calls containing a specific word or for further analysis.

The speech recognition module 43 is advantageously deployed where the audio signal has not yet been compressed. Recognition accuracy and the ease of computation are found to be better for an un-compressed signal than for a compressed one.

The speech recognition module 43 is further advantageously deployed prior to any mixing of the audio signals such as at location 20 so that a single speaker can be recognized at a time. This allows the optional deployment of speaker specific recognition models where the speaker is known from the recording details and also ensures that the output is unambiguously linked to the appropriate party to the call. Hence the output is both more accurate and more useful.

Advantageously, if the unmixed stereo recording is unavailable, the speech recognition module 43 may take as its inputs, the mixed audio recording and the energy envelope files previously generated. These advantageously allow the recognition engine to :-
a) determine which of the two speakers on the call is active at any time and hence apply the most appropriate speaker and vocabulary model enhancing accuracy;
b) label the output with a clear indication as to which party uttered the words detected; and
c) identify more clearly the start and end of utterances which otherwise may merge into one and hence result in lower recognition accuracy as the recognition engine expects a single phrase or sentence in each contiguous utterance rather than two sentences.

Advantageously, the recognition engine 47 is instructed to recognize less than the entire call. As recognition is extremely processor intensive, it can prove beneficial to analyze selected portions of the call. For example, the first 30 seconds can be analyzed to determine the type of call, and the last 30 seconds analyzed to determine the outcome of the call and level of customer satisfaction.

Further, the above partial analysis of the call may be optimized by using the previously derived energy envelope files. Using these energy envelope files, the location and duration of the first and last n utterances by each party can easily be determined and the recognition engine directed to process only these portions of the call. For example, by analyzing the last utterance made by each party it is normally possible to determine the appropriateness of the closure of the call and hence to identify those in which an unusual call closure occurred such as when a CSR hung-up on a customer.

Advantageously, the speech recognition module 43 may only be instructed to analyze a subset of calls that have already proved to be of potential interest due to any combination of recording details and details derived for example from prior energy envelope analysis.

The speech recognition module 43 may also make use of a call flow recording input that indicates the current context of the application(s) being used by the CSR. A vocabulary and grammar model applied by the recognition engine can be influenced by a determination of which application/form and field is active on the CSR's screen. This leads to more accurate recognition and the context can be recorded along with the transcript output allowing subsequent modules to search for words uttered at specific points in the structure interaction flow.

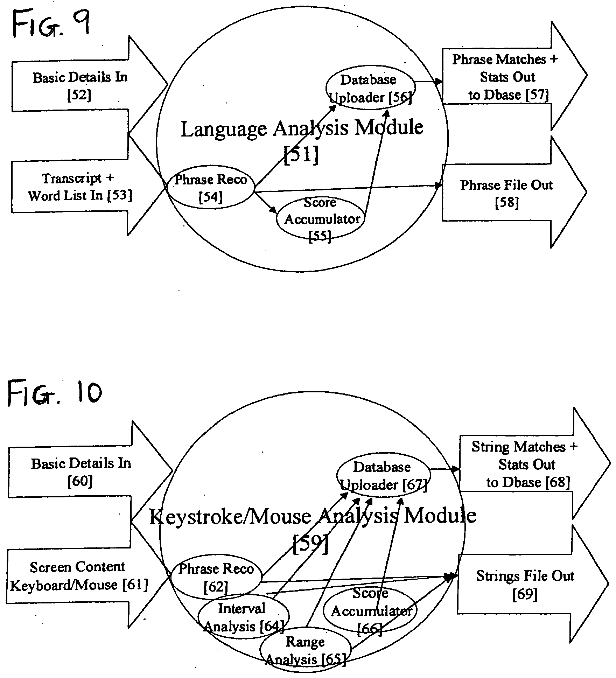

Turning now to Fig. 9, there is illustrated a language analysis module 51 which is used to process the output of the speech recognition module. By comparing the words identified in calls 53 against a list of phrases that are of interest, the call can be annotated with database entries 57 and/or additional recorded file information 58 that highlight the presence or absence of these phrases. The output typically includes the start position of the phrase, its duration and confidence of recognition allowing subsequent review of exactly this portion of the call.

Advantageously, the phrases being sought may include wildcard words, e.g. for example the phrase "you've been? helpful" would match a phrase that contained any word between "been" and "helpful".

The phrases can be grouped according to the type of information they indicate. For example, the above phrase would be a customer satisfaction indicator phrase, whereas the "I'm not sure" would be identified as a training need indicator etc.

Further, each phrase can be allotted a score as to how relevant it is to the type of information sought. For example a simple "thank you" could score +0.1 on the customer satisfaction indicator category whereas "thank you very much" would score +0.3. By storing these relative scores the reviewer can see the relative importance of each phrase matched when reviewing calls.

Advantageously, any cumulative score achieved by each call on each of the categories is summed by a score accumulator 55 and the net results for each call are stored to the database 57 and/or the file 58. The score accumulator may apply a time function that weights the scores for specific categories according to the time within the call, whether absolute or relative, that the phrase is recognized. For example, the customer satisfaction indicator would be weighted more heavily towards the end of the call rather than the beginning as the customer may already be happy or upset due to other factors at the start of the call. The success of the call is more accurately determined by the customer's state at the end of the call.

In situations where both positive and negative scores are assigned to phrases in the same category the system is arranged to separate total positive and negative scores, rather than merely seeking to cancel these out. A call with extremes of positive and negative satisfaction is naturally of more interest and different from one where no expression of satisfaction is made.

Advantageously, the language analysis module 51 may also make use of Call Flow Recording input that indicates the current context of the application(s) being used by the CSR.

Phrases and their scores can be linked to specific contexts within the application and their scores and applicability varied according to this context.

The module 51 may further, also serve to operate on the output of a keystroke analysis module such as described below, taking the words entered into the computer system as another source of input on which phrase matching and scoring can be performed.

With reference now to Fig. 10, there is illustrated a keystroke/mouse analysis module 59 that analyses the screen content and/or keystroke/mouse recordings that can be made at a CSR's PC. Three independent analyses of the keystrokes provide for the following.

First, word and phrase identification 62 can be achieved by combining successive keystrokes into words and then phrases since the module can make the keystroke information a useful search field. The module 59 must take account of the use of mouse clicks, tab keys, enter key etc. that delimit the inputs into a specific field and hence separate subsequent text from that entered prior to the delimiter. Interval analysis 64 is achieved by analyzing the time between successive keystrokes.

Secondly, an indication of typing skills can be obtained. The use of specific keys such as backspace and delete can also give indications of level of typing accuracy. The results of this analysis are useful in targeting typing training courses at those most likely to benefit.

Finally, a range analysis function 65 can be achieved by noting the variety of keys used and compared against other calls. It is then possible to identify users who are unfamiliar with, for example, standard windows shortcut keys (Alt+C) or application specific shortcuts (F2 for order form). The frequency of use of these less common keystrokes can be stored and subsequently used to identify opportunities for windows and/or application specific training.

The outputs of the above stages may be accumulated at location 66 through the call and the net results stored in addition to the individual instances.

The output of this module can again comprise database entries 68 for the call and/or file content 69 listing the results of the analyses 62,64,65,66 discussed above.

## Claims

1. A method of monitoring related communication signal streams, comprising:
receiving an incoming communication signal stream (17) from a calling party to a customer service representative of the related communication signal streams;
receiving an outgoing communication signal stream (17) from the customer service representative to the calling party of the related communication signal streams;
receiving control information (18) associated with the related communication signal streams; and
recording (19) the related communication signal streams and the control information; the method being **characterized by**
automatically analyzing, at a search and replay application (20), the recorded related communication signal streams at a first analysis module (24) to determine recording details and content (27, 28) of the related communication signal streams;
automatically providing the recording details and content to a second analysis module (33) to derive statistical details and an energy envelope (31, 32) of the related communication signal streams, the second analysis module further including a speech recognition module (43) that determines a transcript (50) of the related communication signal streams;
automatically providing a graphical output of the statistical details and energy envelope to the search and replay application (20); and
automatically scoring the related communication signal streams against a set of predetermined criteria based on the transcript to provide an indication of a performance of the customer service representative.

2. The method of claim 1, further comprising storing the statistical details and energy envelope of the related communication signal streams in a database (15).

3. The method of claim 1, wherein the second analysis module (33) further comprises an energy envelope module (33) that determines the audio level (34, 35) of the incoming communication signal stream and the outgoing communication signal stream.

4. The method of claim 1, wherein the statistical details and energy envelope comprise one of a ratio of quiet periods to active periods, periods of clipping, or a maximum value of the audio level.

5. The method of claim 3, wherein the second analysis module (33) further comprises an energy envelope analysis module (37) that determines characteristics (42) of the related communication signal.

6. The method of claim 5, wherein the characteristics (42) of the related communication signal comprise at least one of a proportion of talk periods to listen periods, a frequency of confirmatory feedback from each party, a frequency of argumentative interruption, a proportion of silent periods, locations of sustained silences within the related communication signal streams, which party breaks the silence, an unusual call termination pattern, or episodes of shouting or increasing volume.

7. The method of claim 1, wherein the transcript comprises at least one of identified keywords, a sequence of recognized words, a location of recognized words within the related communication signal streams, and a degree of confidence of the recognition.

8. The method of claim 1, further comprising a language analysis module (51) that determines phrases within the related communication signal streams.

9. The method of claim 1, wherein the second analysis module (33) further comprises a keystroke/mouse analysis module (59) that determines string matches (68) and outputs a string file (69) as additional characteristics.

10. The method of claim 9, wherein the additional characteristics comprise at least one of keywords, phrases, typing skills, and a range analysis.

## Patentansprüche

1. Verfahren zum Überwachen zusammengehörender Kommunikationssignalströme, umfassend:
Empfangen eines eingehenden Kommunikationssignalstroms (17) von einem anrufenden Teilnehmer an einen Kundendienstmitarbeiter der zusammengehörenden Kommunikationssignalströme;
Empfangen eines ausgehenden Kommunikationssignalstroms (17) von dem Kundendienstmitarbeiter an den anrufenden Teilnehmer der zusammengehörenden Kommunikationssignalströme;
Empfangen von zu den zusammengehörenden Kommunikationssignalströmen gehörigen Steuerinformationen (18); und
Aufzeichnen (19) der zusammengehörenden Kommunikationssignalströme und der Steuerinformationen; wobei das Verfahren **gekennzeichnet ist durch**
automatisches Analysieren, an einer Such- und Wiedergabe-Anwendung (20), der aufgezeichneten zusammengehörenden Kommunikationssignalströme an einem ersten Analysemodul (24) zum Ermitteln von Aufzeichnungsdetails und -inhalt (27, 28) der zusammengehörenden Kommunikationssignalströme;
automatisches Bereitstellen der Aufzeichnungsdetails und des -inhalts an ein zweites Analysemodul (33) zum Ableiten von Statistikdetails und einer Energieeinhüllenden (31, 32) der zusammengehörenden Kommunikationssignalströme, wobei das zweite Analysemodul weiterhin ein Spracherkennungsmodul (43) umfasst, das ein Transkript (50) der zusammengehörenden Kommunikationssignalströme ermittelt;
automatisches Bereitstellen einer graphischen Ausgabe der Statistikdetails und Energieeinhüllenden an die Such- und Wiedergabe-Anwendung (20); und
automatisches Auftragen der zusammengehörenden Kommunikationssignalströme gegen eine Reihe vorbestimmter Kriterien auf Grundlage des Transkripts zum Bereitstellen eines Hinweises auf eine Leistung des Kundendienstmitarbeiters.

2. Verfahren nach Anspruch 1, weiterhin umfassend Speichern der Statistikdetails und Energieeinhüllenden der zusammengehörenden Kommunikationssignalströme in einer Datenbank (15).

3. Verfahren nach Anspruch 1, wobei das zweite Analysemodul (33) weiterhin ein Energieeinhüllendenmodul (33) umfasst, das das Audioniveau (34, 35) des eingehenden Kommunikationssignalstroms und des ausgehenden Kommunikationssignalstroms ermittelt.

4. Verfahren nach Anspruch 1, wobei die Statistikdetails und Energieeinhüllende eines aus einem Verhältnis von ruhigen Perioden zu aktiven Perioden, Übersteuerungsperioden oder einem Höchstwert des Audioniveaus umfassen.

5. Verfahren nach Anspruch 3, wobei das zweite Analysemodul (33) weiterhin ein Energieeinhüllendenanalysemodul (37) umfasst, das Eigenschaften (42) des zusammengehörenden Kommunikationssignals ermittelt.

6. Verfahren nach Anspruch 5, wobei die Eigenschaften (42) des zusammengehörenden Kommunikationssignals mindestens eines aus einem Anteil von Redeperioden zu Zuhörperioden, einer Frequenz von zustimmender Rückmeldung von jedem Teilnehmer, einer Frequenz von argumentativer Unterbrechung, einem Anteil stiller Perioden, Stellen anhaltender Stille innerhalb der zusammengehörenden Kommunikationssignalströme, welcher Teilnehmer die Stille unterbricht, einem ungewöhnlichen Anrufbeendigungsmuster oder Episoden von Schreien oder zunehmender Lautstärke umfassen.

7. Verfahren nach Anspruch 1, wobei das Transkript mindestens eines aus festgestellten Schlüsselwörtern, einer Sequenz erkannter Wörter, einer Stelle erkannter Wörter innerhalb der zusammengehörenden Kommunikationssignalströme und einem Überzeugungsgrad des Erkennens umfasst.

8. Verfahren nach Anspruch 1, weiterhin umfassend ein Sprachanalysemodul (51), das Phrasen innerhalb der zusammengehörenden Kommunikationssignalströme ermittelt.

9. Verfahren nach Anspruch 1, wobei das zweite Analysemodul (33) weiterhin ein Tastendruck-/Mausanalysemodul (59) umfasst, das Zeichenkettenübereinstimmungen (68) ermittelt und eine Zeichenkettendatei (69) als zusätzliche Eigenschaften ausgibt.

10. Verfahren nach Anspruch 9, wobei die zusätzlichen Eigenschaften mindestens eines aus Schlüsselwörtern, Phrasen, Tippfähigkeiten und einer Reichweitenanalyse umfassen.

## Revendications

1. Procédé de surveillance de flux de signal de communication connexe, comprenant :
la réception d'un flux de signal de communication entrant (17) d'un appelant à un responsable de service clientèle des flux de signal de communication connexe ;
la réception d'un flux de signal de communication sortant (17) du responsable de service clientèle à l'appelant des flux de signal de communication connexe ;
la réception d'informations de commande (18) associées aux flux de signal de communication connexe ; et
l'enregistrement (19) des flux de signal de communication connexe et des informations de commande; le procédé étant **caractérisé par**
l'analyse automatique, au niveau d'une l'application de recherche et relecture (20), les flux de signal de communication connexe enregistrés au niveau d'un premier module d'analyse (24) pour déterminer des détails d'enregistrement et un contenu (27, 28) des flux de signal de communication connexe ;
la fourniture automatique des détails d'enregistrement et du contenu à un deuxième module d'analyse (33) pour obtenir des détails statistiques et une enveloppe d'énergie (31, 32) des flux de signal de communication connexe, le deuxième module d'analyse comprenant en outre un module de reconnaissance vocale (43) qui détermine une transcription (50) des flux de signal de communication connexe ;
la fourniture automatique d'une sortie graphique des détails statistiques et de l'enveloppe d'énergie à l'application de recherche et relecture (20) ; et
la notation automatique des flux de signal de communication connexe en fonction d'un ensemble de critères prédéterminés sur la base de la transcription pour fournir une indication d'une performance du responsable de service clientèle.

2. Procédé selon la revendication 1, comprenant en outre le stockage des détails statistiques et de l'enveloppe d'énergie des flux de signal de communication connexe dans une base de données (15).

3. Procédé selon la revendication 1, dans lequel le deuxième module d'analyse (33) comprend en outre un module d'enveloppe d'énergie (33) qui détermine le niveau audio (34, 35) du flux de signal de communication entrant et du flux de signal de communication sortant.

4. Procédé selon la revendication 1, dans lequel les détails statistiques et l'enveloppe d'énergie comprennent un parmi un rapport entre périodes de silence et périodes actives, des périodes de coupure ou une valeur maximale du niveau audio.

5. Procédé selon la revendication 3, dans lequel le deuxième module d'analyse (33) comprend en outre un module d'analyse d'enveloppe d'énergie (37) qui détermine des caractéristiques (42) du signal de communication connexe.

6. Procédé selon la revendication 5, dans lequel les caractéristiques (42) du signal de communication connexe comprennent au moins un parmi une proportion de périodes de parole par rapport à des périodes d'écoute, une fréquence de réaction de confirmation provenant de chaque partie, une fréquence d'interruption d'argumentation, une proportion de périodes de silence, des emplacements de silences prolongés dans les flux de signal de communication connexe, la partie qui rompt le silence, un schéma de terminaison d'appel inhabituel ou des épisodes de cri ou de volume croissant.

7. Procédé selon la revendication 1, dans lequel la transcription comprend au moins un parmi des mots-clés identifiés, une séquence de mots reconnus, un emplacement de mots reconnus dans les flux de signal de communication connexe et un degré de fiabilité de la reconnaissance.

8. Procédé selon la revendication 1, comprenant en outre un module d'analyse linguistique (51) qui détermine des phrases à l'intérieur des flux de signal de communication connexe.

9. Procédé selon la revendication 1, dans lequel le deuxième module d'analyse (33) comprend en outre un module d'analyse de frappe/souris (59) qui détermine des correspondances de chaînes de caractères (68) et délivre en sortie un fichier de chaînes de caractères (69) comme des caractéristiques additionnelles.

10. Procédé selon la revendication 9, dans lequel les caractéristiques additionnelles comprennent au moins un parmi des mots-clés, des phrases, des aptitudes en dactylographie et des analyses de gammes.
